# EUROPEAN PATENT SPECIFICATION

(11) **EP 4 502 989 B1**
(45) Date of publication and mention of the grant of the patent: **06.05.2026**
(21) Application number: 23779162.9
(22) Date of filing: 01.03.2023
(51) Int. Cl.: G09B 23/30, B32B 7/12, B32B 15/082, B32B 27/30, G09B 9/00, G09B 23/28, B32B 15/20

(54) **CONDUCTIVE RESIN COMPOSITION-METAL LAMINATE**
LEITFÄHIGES LAMINAT AUS HARZZUSAMMENSETZUNG UND METALL
STRATIFIÉ MÉTALLIQUE DE COMPOSITION DE RÉSINE CONDUCTRICE

(30) Priority: 30.03.2022 JP 2022056102
(43) Date of publication of application: 05.02.2025
(73) Proprietor: Denka Company Limited, Tokyo 103-8338 (JP)
(72) Inventor: FUKUDA, Yuko, Tokyo 103-8338 (JP)
(74) Representative: Murgitroyd & Company
(86) International application number: PCT/JP2023/007530
(87) International publication number: WO 2023/189132

(56) References cited:
- JP-A- 2017 165 040
- JP-A- 2018 043 359
- JP-A- 2018 178 069
- JP-A- 2019 065 080
- JP-A- 2019 065 080
- JP-A- 2019 086 794
- JP-A- 2020 033 427
- JP-A- 2020 126 216
- JP-A- 2020 159 554
- KAKUTANI TSUTOMU: "Advances of Applications in the Field of Thermoplastic Elastomers III. Styrene Dienes Thermoplastic Elastomers", POLYMER, vol. 25, no. 5, 1 January 1976 (1976-01-01), pages 315 - 318, XP093093790

## Description

### TECHNICAL FIELD

The present invention relates to conductive resin composition-metal laminates and organ models using the same.

### BACKGROUND

Recently, expectations have increased for minimally invasive surgery, for example, surgery using an endoscope or a laparoscope, which has a low burden on the human body and from which early recovery can be expected, and the number of such cases has increased. For example, endoscopic removal of tumors formed in the submucosa inside an organ (endoscopic submucosal dissection) allows surgery to be performed with smaller wounds compared with conventional laparotomy. For example, by stopping hemorrhaging in the digestive tract endoscopically (endoscopic hemostasis), shock due to hemorrhaging is prevented and emergency surgery can be avoided. Therefore, the physical burden for the patient is reduced and early social reintegration due to the short hospitalization period is expected.

Due thereto, there is increasing demand from doctors and medical students for technique practice models corresponding to surgery using endoscopes or laparoscopes. Hitherto, medical technique practice models for improving techniques and improving the quality of medical practice have been proposed (Patent Documents 1, 2, and 3).

Further, there has been an increasing number of cases where surgical energy devices are used as the instruments utilized.
Patent Document 1: JP 2006-116206 A
Patent Document 2: JP 2008-197483 A
Patent Document 3: JP 2015-085017 A

Further the disclosures of JP 2020 159554 A and JP 2019 065080 A may be helpful for understanding the present invention.

JP 2020 159554 A refers to an anti-squeal shim, which includes at least a first metal layer and an elastomer layer that is bonded to the first metal layer. The at least first metal layer is configured as a first electrode for electrical connection to a resistance measuring system, and the elastomer layer is configured with structural spatial features that enable the elastomer layer to obtain a reduced thickness when subjected to a mechanical force in a direction perpendicular to the elastomer layer.

JP 2020 159554 A refers to a conductive resin composition and an organ model used by a doctor or a medical student to practice a surgical procedure using an endoscope or a laparoscope.

### SUMMARY OF THE INVENTION

When a counter electrode plate is attached to skin, for example, an adhesive gel in which an electrolyte has been dispersed in polyacrylic acid or the like is used. However, with regard to conventional medical technique practice models, counter electrode plates cannot be connected with sufficient strength and there have been cases of counter electrode plates readily peeling off when instruments such as energy devices or laparoscopes contact a medical technique practice model.

Thus, there is a need for organ models onto which a counter electrode plate can be affixed with a certain strength or greater and which can be used in medical technique practice using an energy device.

The present invention addresses the problem of providing a conductive resin composition-metal laminate and an organ model onto which a counter electrode plate can be affixed with a certain strength or greater and which can be used in medical technique practice using an energy device.

As a result of investigating various means, the present inventor found that, by laminating a metal layer on a substrate layer formed from a conductive resin composition containing a styrene-based thermoplastic elastomer via an adhesive agent layer, it becomes possible to affix a counter electrode plate with a certain strength or greater and to use the laminate in medical technique practice using an energy device, completing the present invention.

The present invention relates to a medical technique practice organ model according to claim 1. Advantageous embodiments may include features of depending claims. Thus, the invention refers to the following.
(1) A medical technique practice organ model comprising a conductive resin composition-metal laminate comprising: a substrate layer formed from a conductive resin composition containing a styrene-based thermoplastic elastomer; and a metal layer laminated on one surface of the substrate layer via an adhesive agent layer.
(2) The medical technique practice organ model described in (1), wherein the conductive resin composition-metal laminate has a volume resistivity of 1.0×10² to 1.0×10⁷ Ω·cm.
(3) The medical technique practice organ model described in (1) or (2), wherein the adhesive agent layer contains one or more adhesive agents selected from the group consisting of epoxy-based adhesive agents, olefin-based adhesive agents, cyanoacrylate-based adhesive agents, urethane-based adhesive agents, and silicone-based adhesive agents.
(4) The medical technique practice organ model described in any of (1) to (3) connected to a counter electrode plate.
(5) The organ model described in (1) or (2), wherein the medical technique practice uses an energy device.
(6) The organ model described in (5), wherein the energy device is any device selected from the group consisting of a high-frequency hemostatic forceps, an electroscalpel, an ultrasonic scalpel, and a high-frequency radioscalpel.
(7) The organ model described in (1) or (2), comprising a simulated blood vessel connected to a device that can supply simulated blood.
(8) The organ model described in (1) or (2), wherein the medical technique practice is the practice of endoscopic hemostasis.
(9) The organ model described in (8), wherein the practice of endoscopic hemostasis is the practice of hemostasis by thermocoagulation using an energy device.

According to the present invention, a conductive resin composition-metal laminate and an organ model onto which a counter electrode plate can be affixed at a certain strength or greater and which can be used in medical technique practice using an energy device such as hemostasis can be provided.

### BRIEF DESCRIPTION OF DRAWINGS

Fig. 1 shows a cross-section of a conductive resin composition-metal laminate of a first embodiment of the present invention.
Fig. 2 shows a cross-section of an organ model of a second embodiment of the present invention.
Fig. 3 shows a cross section of a modified example of the organ model of the second embodiment of the present invention.

### DESCRIPTION OF EMBODIMENTS

An embodiment of the present invention shall be described in detail below. The present invention is not limited to the following embodiments and can be implemented with modifications added, as appropriate, as long as the effects of the present invention are not inhibited.

### [First Embodiment]

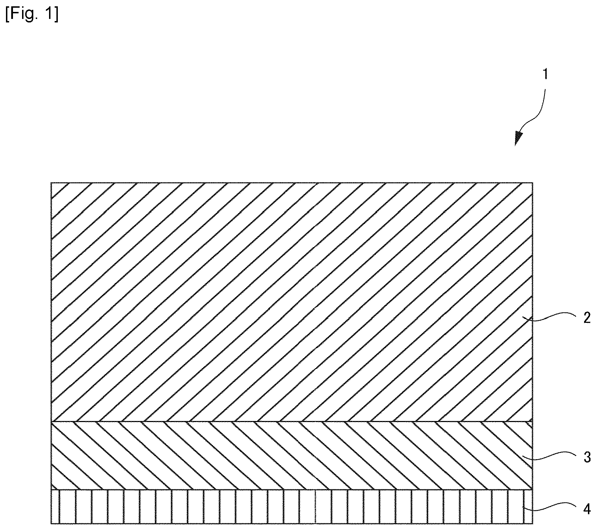

A conductive resin composition-metal laminate according to a first embodiment of the present invention comprises: a substrate layer formed from a conductive resin composition containing a styrene-based thermoplastic elastomer; and a metal layer laminated on one surface of the substrate layer via an adhesive agent layer. Fig. 1 shows a conductive resin composition-metal laminate 1 of the present embodiment, and the laminate comprises a substrate layer 2, an adhesive agent layer 3, and a metal layer 4 in this order.

The volume resistivity of the conductive resin composition-metal laminate is preferably 1.0×10² to 1.0×10⁷ Ω·cm and more preferably 1.0×10² to 5.0×10⁵ Ω·cm. The volume resistivity can be determined by, for example, after adjusting a test piece of any shape for 24 hours or more in an environment with a temperature of 23±2°C and a relative humidity of 50±5%, measuring the volume resistivity in compliance with JIS C 2139 after 20 seconds have elapsed from electrifying with a PSP probe at a voltage of 10 V using a commercially available machine (for example, a Loresta GP resistivity meter (model number: MCP-T610) manufactured by Mitsubishi Chemical Analytech, Co., Ltd. or the like). By setting the volume resistivity to 1.0×10⁷ Ω·cm or less, incisions by the energy device become possible.

### [Substrate Layer]

As shown in Fig. 1, the substrate layer in the present embodiment is one layer constituting the conductive resin composition-metal laminate and is a structure formed from a conductive resin composition containing a styrene-based thermoplastic elastomer.

The shape of the substrate layer is not particularly limited and can be set in keeping with the application thereof. Further, the method of molding the substrate layer can be selected, as appropriate, from extrusion molding, cast molding, injection molding, compression molding, etc. in keeping with the shape to be molded.

In one embodiment of the present invention, the thickness of the substrate layer can be set to 0.1-30 mm or 1-20 mm.

### (Conductive Resin Composition)

In one embodiment of the present invention, the conductive resin composition is a conductive resin composition containing a styrene-based thermoplastic elastomer and the volume resistivity thereof is preferably 1.0×10² to 1.0×10⁷ Ω·cm and more preferably 1.0×10² to 1.0×10⁶ Ω·cm. The volume resistivity of the conductive resin composition is measured with a method similar to the abovementioned method of measuring the volume resistivity of the conductive resin composition-metal laminate.

### (Styrene-based Thermoplastic Elastomer)

The conductive resin composition of the present embodiment contains a styrene-based thermoplastic elastomer. The styrene-based thermoplastic elastomer in one embodiment of the present invention is an aromatic vinyl/conjugated diene block copolymer comprising a block polymerization unit (X) derived from an aromatic vinyl and a block polymerization unit (Y) derived from a conjugated diene, or a hydrogenated product thereof.

Forms of aromatic vinyl/conjugated diene block copolymers having such a configuration are represented by, for example, X(YX)ₙ or (XY)ₙ where n is an integer of 1 or greater. Among these, those with the form X(YX)ₙ and particularly those with the form X-Y-X are preferred. The X-Y-X form is preferably one or more copolymers selected from the group consisting of a polystyrene-polybutadiene-polystyrene block copolymer, a polystyrene-polyisoprene-polystyrene block copolymer, and a polystyrene-polyisoprene/butadiene-polystyrene block copolymer.

In such an aromatic vinyl/conjugated diene block copolymer, an aromatic vinyl block unit (X), which is a hard segment, is present as a crosslinking point of a conjugated diene rubber block unit (Y) and forms a pseudo cross-link (domain). This conjugated diene rubber block unit (Y) that is present between the aromatic vinyl block units (X) is a soft segment and has rubber elasticity.

Examples of aromatic vinyls that form the block polymerization unit (X) include styrene, *α*-methylstyrene, 3-methylstyrene, *p*-methylstyrene, 4-propyl styrene, 4-dodecylstyrene, 4-cyclohexylstyrene, 2-ethyl-4-benzylstyrene, 4-(phenylbutyl)styrene, 1-vinylnaphthalene, 2-vinylnaphthalene, etc. Among these, styrene is preferred.

Examples of conjugated dienes that form the block polymerization unit (Y) include butadiene, isoprene, pentadiene, 2,3-dimethyl butadiene, combinations thereof, etc. Among these, one or more conjugated dienes selected from the group consisting of butadiene, isoprene, and a combination of butadiene and isoprene (butadiene-isoprene copolymerization) are preferred. It is also possible to use one or more of these conjugated dienes in combination. The conjugated diene block polymerization unit (Y) consisting of butadiene/isoprene copolymerization units may be any of a random copolymerization unit, a block copolymerization unit, and a tapered copolymerization unit of butadiene and isoprene.

In an aromatic vinyl/conjugated diene block copolymer such as that described above, the content of the aromatic vinyl block polymerization unit (X) is preferably 5 mass% or greater and 50 mass% or less and more preferably 20 mass% or greater and 40 mass% or less. The content of this aromatic vinyl unit can be measured by a normal method such as infrared spectroscopy or NMR spectroscopy.

In one embodiment of the present invention, the melt flow rate (MFR) (temperature: 230°C, load: 2.16 kg) of the styrene-based thermoplastic elastomer is 1 g/10 minutes or less, and preferably 0.1 g/10 minutes or less. MFR (temperature: 230°C, load: 2.16 kg) means MFR measured in compliance with JIS K 7210 under conditions of a temperature of 230°C and a load of 2.16 kg. By setting the MFR to a certain value or lower, when oil has been added, bleed-out occurring more readily and mechanical strength decreasing is suppressed.

Aromatic vinyl/conjugated diene block copolymers such as that described above can be produced by various methods. Examples of production methods include (1) a method of consecutively polymerizing an aromatic vinyl and then a conjugated diene with an alkyl lithium compound such as n-butyllithium as an initiator, (2) a method of polymerizing an aromatic vinyl and then a conjugated diene with an alkyllithium compound as an initiator, and coupling the same by means of a coupling agent, and (3) a method of consecutively polymerizing a conjugated diene and then an aromatic vinyl with a lithium compound as an initiator.

In one embodiment of the present invention, aromatic vinyl/conjugated diene block copolymers as described above which have been hydrogenated by publicly known methods can preferably be used. The preferred hydrogenation rate is 90 mol% or greater. This hydrogenation rate is a value when the entire amount of carbon-carbon double bonds in the conjugated diene block polymerization unit (Y) is set as 100 mol%. Examples of such a hydrogenated styrene-based thermoplastic elastomer include polystyrene-poly(ethylene/propylene) block (SEP), polystyrene-poly(ethylene/propylene) block-polystyrene (SEPS), polystyrene-poly(ethylene/butylene) block-polystyrene (SEBS), polystyrene-poly(ethylene-ethylene/propylene) block-polystyrene (SEEPS), etc. More specific examples include SEPTON (manufactured by Kuraray Co. Ltd.), Kraton (manufactured by Shell Chemicals), Kraton G (manufactured by Shell Chemicals), Tuftec (manufactured by Asahi Kasei Corp.), etc. (the above are product names).

The hydrogenation rate is measured by a publicly known method such as nuclear magnetic resonance (NMR) spectral analysis.

In the present invention, SEEPS is preferred as the styrene-based thermoplastic elastomer. From the perspective of oil absorption work before kneading, the form of the styrene-based thermoplastic elastomer is preferably a powder or an amorphous (crumb) form.

### (Oil)

In one embodiment of the present invention, the conductive resin composition contains an oil. The oil is not particularly limited, and examples thereof include mineral oil-based oils such as paraffin-based process oils, naphthene-based process oils, aromatic-based process oils, and liquid paraffin, silicone oil, castor oil, linseed oil, olefin-based waxes, mineral-based waxes, etc. Among these, paraffin-based and/or naphthene-based process oils are preferred. Examples of the process oil include the Diana Process Oil series (manufactured by Idemitsu Kosan Co., Ltd.), JOMO Process P (manufactured by Japan Energy Inc.), etc.

The oil is used, for example, to soften the resin composition and adjust the elastic modulus or hardness of the organ model. It is also possible to use one or more of the above oils in combination.

It is preferable that the oil is allowed to be absorbed by the hydrogenated styrene-based thermoplastic elastomer in advance in view of workability.

The content of the oil is preferably 100-1,000 parts by mass, more preferably 100-700 parts by mass, still more preferably 100-600 parts by mass, and most preferably 200-500 parts by mass with respect to 100 parts by mass of the styrene-based thermoplastic elastomer. The content of the oil is adjusted within the range described above according to the site, etc. of the actual organ on which the model is based. By setting the content of the oil to 100 parts by mass or greater with respect to 100 parts by mass of the styrene-based thermoplastic elastomer, insufficient softness is suppressed, and by setting the content to 1,000 parts by mass or less, the hydrogenated styrene-based thermoplastic elastomer cannot completely occlude the oil, so it is possible to suppress compounding inability.

### (Conductivity-imparting Agent)

In one embodiment of the present invention, the conductive resin composition further contains a conductivity-imparting agent. Polymeric anti-static agents, ionic liquids, etc. can be used as the conductivity-imparting agent.

### • Polymeric anti-static agent

Examples of the polymeric anti-static agent include copolymers of a hydrophobic polymer and a hydrophilic polymer, carbon nanomaterials, and conductive polymers.

### •• Copolymer of a hydrophobic polymer and a hydrophilic polymer

In one embodiment, the polymeric anti-static agent is not particularly limited, but preferably indicates a copolymer of a hydrophobic polymer and a hydrophilic polymer and more preferably a copolymer having one or more hydrophobic polymer blocks and hydrophilic polymer blocks, respectively. Hydrophilic means having a functional group or polarity which forms intramolecular hydrogen bonds, and hydrophobic means non-hydrophilic. Here, it does not matter whether the coupling scheme of the blocks is a block copolymer wherein the hydrophilic polymer blocks and the hydrophilic polymer blocks are connected linearly or a graft copolymer wherein a graft chain is linked to either polymer chain as a branched chain, but the block copolymer is more preferred. The anti-static agents described in, for example, JP 2001-278985 A, JP 2013-213195 A, JP 2015-096595 A, JP 2016-166332 A, JP 2017-101217 A, and WO 2016/084954 A can be used as the polymeric anti-static agent in one embodiment of the present invention.

More specifically, examples include polyethers which have a hydrophilic group and are block copolymerized (non-ionic types such as polyether ester amides, ethylene oxide-epichlorohydrins, and polyether esters, anionic types such as polystyrene sulfonic acids, cationic types such as quaternary ammonium-containing poly(meth)acrylates, etc.). Among these, a diblock copolymer having a structure in which a polyethylene glycol block and polypropylene glycol block and a polyether block and polyolefin block are bonded via at least one bond selected from an ester bond, an amide bond, an ether bond, a urethane bond, and an imide bond or a block copolymer having a structure in which the same are repeatedly and alternately bonded via the same can be used, and an example thereof is a block copolymer with a structure in which a polyether block, which is a hydrophilic block with a volume resistivity of 10⁵ to 10¹¹ Ω·cm, and a polyolefin block are repeatedly and alternately bonded. The number-average molecular weight (Mn) of the block copolymer is preferably 2,000-60,000.

Further, examples of commercially available copolymers include, for instance, products manufactured under the product names "PELESTAT^{®}" ("PELESTAT 300", "PELESTAT 230", "PELESTAT NC6321", "PELESTAT NC6322", "PELESTAT NC7350", "PELESTAT HC250", etc.) and "PELECTRON^{®}" ("PELECTRON PVH", "PELECTRON PVL", "PELECTRON HS", "PELECTRON LMP-FS", etc.) by SANYO CHEMICAL INDUSTRIES, LTD., products manufactured under the product name "Sankonol^{®}" ("Sankonol TBX-65", etc.) by Sanko Chemical Industry Co., Ltd., the product manufactured under the product name "ENTIRA^{®}AS" by Mitsui Du Pont Polychemicals Co. Ltd., the product manufactured under the proprietary name "Pebax^{®}" by Arkema K.K., the product manufactured under the product name "Stat-Rite^{®}" by The Lubrizol Corporation, the product manufactured under the proprietary name "IonPhasE^{®} IPE^{®} U2" by IonPhasE Oy, the products manufactured under the product names "PLURONIC L-31" and "PLURONIC L-41" by ADEKA CORPORATION, the products manufactured under the product names "ALKOX^{®} EP1010N" and "ALKOX^{®} CP-A1 H" by Meisei Chemical Works, Ltd., etc. and these may be used alone or used in combination.

Further, a block polymer in which a polyolefin block, a polyisobutylene block, and a hydrophilic polymer block with a volume resistivity of 1×10⁵ to 1×10¹¹ Ω·cm are bonded via at least one bond selected from the group consisting of an ester bond, an amide bond, an ether bond, an imide bond, and a urethane bond can be used as the copolymer of the present embodiment.

Moreover, it is also possible to use a block polymer having, as constituent units, a hydrophobic polymer block without a polyether, a hydrophilic polymer block, and an aromatic ring-containing hydrophobic polyether block; a block polymer characterized by having a structure in which a polyolefin block and a hydrophilic polymer block with a volume resistivity of 10⁵ to 10¹¹ Ω·cm are repeatedly and alternately bonded; a block polymer having, as constituent units, a block of at least one hydrophobic polymer selected from the group consisting of a polyamide, a polyolefin, and a polyamide-imide, a hydrophilic polymer block, and an aromatic ring-containing hydrophobic polyether block; etc.

The Mn and the weight-average molecular weight (hereafter abbreviated as Mw) of the copolymer in the present invention can be measured using gel permeation chromatography (GPC) under the following conditions.
Devices (examples): HLC-8321 GPC/HT (manufactured by Tosoh Corporation),
PL-GPC 220 (manufactured by Agilent Technologies, Inc.), and SSSC-7100 (manufactured by Senshu Scientific Co., Ltd.)
Columns (examples): Two "TSKgel GMH HR-H (20) HT" (manufactured by Tosoh Corporation)
Measurement temperature: 140°C
Sample solution: 0.3% by weight orthodichlorobenzene solution
Solution injection amount: 100 µl
Detector: FT-IR detector
Reference substance: 12 standard polystyrenes (TSKstandard POLYSTYRENE) (molecular weight: 500, 1,050, 2,800, 5,970, 9,100, 18,100, 37,900, 96,400, 190,000, 355,000, 1,090,000, 2,890,000) (manufactured by Tosoh Corporation)

### •• Carbon nanomaterial

Carbon nanotubes, carbon nanofibers, etc. can be used as the carbon nanomaterial.

The content of the carbon nanomaterial is preferably 10-1,000 parts by mass, more preferably 100-800 parts by mass, and still more preferably 200-800 parts by mass with respect to 100 parts by mass of the styrene-based thermoplastic elastomer 100. By setting the content of the carbon nanomaterial to 10 parts by mass or greater with respect to 100 parts by mass of the styrene-based thermoplastic elastomer, the volume resistivity becomes a certain level or lower, and by setting the content to 1,000 parts by mass or less, decreases in flexibility are suppressed.

### •• Conductive polymer

Water-soluble polymeric hydrogels, polythiophene-based conductive polymers, etc. can be used as the conductive polymer.

The content of the conductive polymer is preferably 50-1,000 parts by mass, more preferably 100-800 parts by mass, and still more preferably 200-800 parts by mass with respect to 100 parts by mass of the styrene-based thermoplastic elastomer. By setting the content of the conductive polymer to 50 parts by mass or greater with respect to 100 parts by mass of the styrene-based thermoplastic elastomer, the volume resistivity becomes a certain level or lower, and by setting the content to 1,000 parts by mass or less, decreases in mechanical strength can be suppressed.

The content of the polymeric anti-static agent is preferably 10-200 parts by mass and more preferably 100-150 parts by mass with respect to 100 parts by mass of the styrene-based thermoplastic elastomer. Setting the content of the polymeric anti-static agent to 10 parts by mass or greater with respect to 100 parts by mass of the styrene-based thermoplastic elastomer can suppress increases in volume resistivity, and by setting the content to 200 parts by mass or less, increases in hardness of the material can be suppressed.

### - Ionic liquid -

The ionic liquid is not particularly limited and examples thereof include those composed of cations and anions. The ionic liquid in one embodiment of the present invention does not contain solvents such as water or ethylene glycol.

Amidinium cations, pyridinium cations, pyrazolium cations, guanidinium cations, etc. can be used as the cation.

Carboxylic acids, sulfonic acids, inorganic acids, halogen atom-containing alkyl group-substituted inorganic acids, halogen atom-containing sulfonyl imides, halogen atom-containing sulfonyl methides, halogen atom-containing carboxylic acid amides, nitrile group-containing imides, nitrilecontaining methides, halogen atom-containing alkylamines, and anions wherein protons have been removed from an acid such as cyanic acid can be used as the anion. The anion may be a mixture of two or more.

Moreover, commercially available ionic liquids can also be used. Examples of commercially available ionic liquids include, for instance, CIL312 (N-butyl-3-methylpyridinium/bistrifluoromethanesulfonylimide, manufactured by Japan Carlit Co., Ltd.), Aminoion AS100 (manufactured by Nippon Nyukazai Co., Ltd.), Aminoion AS300 (manufactured by Nippon Nyukazai Co., Ltd.), FC-4400 (tri-n-butylmethylammonium bistrifluoromethanesulfonimide, manufactured by 3M), and Hishicolin (dodecyltributylphosphonium chloride, manufactured by Nippon Chemical Industrial CO., LTD.).

The method for synthesizing the ionic liquid is not particularly limited as long as the target ionic liquid can be obtained, and examples thereof include, for instance, a halide method, a hydroxide method, an acid ester method, a complexation method, a neutralization method, etc. which are described in "Ionic Liquids: The Front and Future of Material Development" (Hiroyuki Ohno, 2003, CMC Publishing Co., Ltd.).

The content of the ionic liquid is preferably 50-250 parts by mass, more preferably 50-240 parts by mass, and still more preferably 70-210 parts by mass with respect to 100 parts by mass of the styrene-based thermoplastic elastomer. Setting the content of the ionic liquid to 50 parts by mass or greater with respect to 100 parts by mass of the styrene-based thermoplastic elastomer can contribute to the suppression of increases in volume resistivity and to the impartation of softness, and by setting the content to 250 parts by mass or less, bleed-out of the ionic liquid from the material can be suppressed.

### (Other Additives)

It is possible to blend and use, as necessary, resins, elastomers, rubbers, plasticizers, fillers or stabilizers, anti-aging agents, light resistance improvers, ultraviolet absorbers, softeners, lubricants, processing aids, colorants, antifogging agents, anti-blocking agents, crystal nucleating agents, foaming agents, etc. other than the foregoing in the conductive resin composition of the present invention.

In particular, when the conductive resin composition of the present embodiment is used as an organ model, it is preferred that, for example, a colorant such as a pigment or dye is used to color the organ model a color approximating that of the organ in a living body.

In one embodiment of the present invention, the conductive resin composition contains a styrene-based thermoplastic elastomer, a polymeric anti-static agent, an ionic liquid, and an oil.

A suitable publicly known blending method can be used to produce the conductive resin composition of the present embodiment. For example, melt-mixing can be performed with a single-screw extruder, a twin-screw extruder, a Banbury type mixer, a plastomill, a co-kneader, a heating roller, etc. Before melt-mixing is performed, the raw materials may be mixed uniformly by a Henschel mixer, a ribbon blender, a super mixer, a tumbler, etc. The melt-mixing temperature is not particularly limited, but is generally 100-300°C and preferably 150-250°C.

### [Adhesive Agent Layer]

The adhesive agent layer in the present embodiment is a layer formed with an adhesive agent which, as shown in Fig. 1, is one layer constituting the conductive resin composition-metal laminate and is directly laminated on the substrate layer.

In one embodiment of the present invention, the average thickness of the adhesive agent layer is 500 µm or less, but is preferably 350 µm or less, more preferably 200 µm or less, and still more preferably 50 µm or less. The lower limit of the average thickness of the adhesive agent layer is not particularly limited so long as the invention can be implemented, but can be set to 5 µm or greater, 10 µm or greater, or 20 µm or greater. By setting the thickness of the adhesive agent layer to 500 µm or less, volume resistivity can be suppressed and the conductive resin composition-metal laminate becomes flexible and its ability to follow curved surfaces can be enhanced. Further, by setting the thickness of the adhesive agent layer to 5 µm or greater, adhesive strength between a molded article of the conductive resin composition and the metal layer can be made a certain level or greater.

As discussed below, the adhesive agent layer is normally formed by coating and in cases in which the layer has been formed by a coating method, the thickness stated here is the post-drying thickness.

Measurement of the layer thickness is performed by cutting 20 mm square sections from five locations on the laminate which are spaced evenly in the width direction and smoothing the end surfaces such that the layer configuration can be judged, then using a laser microscope (VK-8510 manufactured by KEYENCE CORPORATION). The thickness at the five locations is measured and the arithmetic mean thereof is considered the average thickness of the adhesive agent layer.

### (Adhesive Agent)

One or more adhesive agents selected from the group consisting of epoxy-based adhesive agents, olefin-based adhesive agents, cyanoacrylate-based adhesive agents, urethane-based adhesive agents, and silicone-based adhesive agents can be suitably used as the adhesive agent forming the adhesive agent layer.

Examples of epoxy-based adhesive agents include general adhesive agents of the type where a compound having two or more reactive epoxy groups is cured by various curing agents such as amine-based compounds, polyamide-based compounds, dicyandiamide, and imidazole-based compounds. Specific examples of epoxy-based adhesive agents include adhesive agents wherein a primary agent selected from modified liquid epoxy resins such as bisphenol A-type epoxy resins, bisphenol F-type epoxy resins, and novolac-type epoxy resins is combined with an amine-based curing agent such as a linear aliphatic amine, a cycloaliphatic amine, or an aromatic amine, an amide-amine curing agent, etc.

Examples of olefin-based adhesive agents include, for instance, various olefin homopolymers such as ethylene, propylene, butene, and hexene and copolymers of these monomers together or these monomers with a non-olefin-based monomer. Specific examples of olefin-based adhesive agents include ethylene-based resins such as low-density polyethylenes, linear polyethylenes (ethylene-α-olefin copolymers), and high-density polyethylenes, polypropylene, polypropylene-based resins such as ethylene-propylene copolymers, poly(4-methylpentene-1), poly(butene-1), ethylene-vinyl acetate copolymers, acidmodified polyolefin-based resins where a maleic anhydride modification (process) has been performed on the foregoing, etc. and these can be used alone or in combinations of two or more.

Cyanoacrylate-based adhesive agent refers to a composition comprising a 2-cyanoacrylate as a primary polymer component. Examples of 2-cyanoacrylates include alkyl 2-cyanoacrylates, cycloalkyl 2-cyanoacrylates, alkoxyalkyl 2-cyanoacrylates, alkenyl 2-cyanoacrylates, alkynyl 2-cyanoacrylates, fluoroalkyl 2-cyanoacrylates, silicon-containing 2-cyanoacrylates, etc. Among these, specific examples of alkyl 2-cyanoacrylates include methyl 2-cyanoacrylate, ethyl 2-cyanoacrylate, various propyl 2-cyanoacrylates, various butyl 2-cyanoacrylates, various pentyl 2-cyanoacrylates, various hexyl 2-cyanoacrylates, various octyl 2-cyanoacrylates, etc. Specific examples of alkoxyalkyl 2-cyanoacrylates include ethoxyethyl 2-cyanoacrylate, methoxyethyl 2-cyanoacrylate, methoxyisopropyl 2-cyanoacrylate, etc.

Urethane-based adhesive agents are preferably adhesive agents composed of at least one polyol component having at least two hydroxyl groups in a molecule thereof and at least one polyisocyanate component having at least two isocyanate groups in a molecule thereof and/or a diisocyanate. The polyol component can be selected, as appropriate, from polyester polyols, polyether polyols, acrylic polyols, polyolefin polyols, etc. and polyester polyols are particularly preferred because their performance in suppressing decreases in adhesion over time is high. Examples of diisocyanates can include aromatic diisocyanates such as 4,4'-, 2,4'-, and 2,2'-diisocyanate diphenyl methane, 1,5-diisocyanate naphthalene, 4,4'-diisocyanate dicyclohexylmethane, 1,4-diisocyanate benzene, and/or 2,4- or 2,6-diisocyanate toluene, and aliphatic and alicylic diisocyanates such as 1,6-diisocyanate hexane, 1,10-diisocyanate decane, 1,3-diisocyanate cyclopentane, 1,4-diisocyanate cyclohexane, 1-isocyanate-3,3,5-trimethyl-3 or -5-isocyanate methanecyclohexane. The polyisocyanate component can be produced from monomers of these diisocyanates. Specifically, examples include the product manufactured under the product name "Ultra Multi-Purpose SU Premium Soft" by Konishi Co., Ltd., etc.

Silicone-based adhesive agent means an adhesive agent having, as the primary component, a modified silicone polymer that has a hydrolyzable silicon group as a reactive group and in which the main chain is a polyoxyalkylene backbone. Examples include those composed of a polymer having a hydrolyzable silyl group at both ends of a polyoxypropylene main chain. For instance, as commercially available silicone-based adhesives, there are Super X Clear (manufactured by CEMEDINE Co., Ltd.), etc.

In one embodiment of the present invention, the adhesive agent layer may contain metal particles such as copper, silver, gold, tin, nickel, titanium, or platinum and the adhesive agents discussed above. The content thereof is preferably 10-70% mass, more preferably 15-60% by mass, and still more preferably 20-50% by mass in the composition constituting the adhesive agent layer. In cases where metal particles are added, by setting the content to 10% by mass or greater, the volume resistivity becomes a certain level or lower, and by setting the content to 70% by mass or less, decreases in adhesive strength are suppressed.

In one embodiment of the present invention, the average particle size of the metal particles is preferably 0.01-50 µm, more preferably 0.03-30 µm, and still more preferably 0.03-10 µm. Here, the average particle size means the average primary particle size, is a value measured with a laser diffraction/scattering type particle size distribution measurement method and is a 50% integrated value particle size in a volume-based particle size distribution. Two or more kinds of metal particles with different average particle sizes may be used and the metal particles may be particles coated with a metal.

### [Metal Layer]

The metal layer is a layer formed from a metal which, as shown in Fig. 1, is one layer constituting one surface of the conductive resin composition-metal laminate. For example, metal foils and metal thin films such as aluminum, nickel, stainless steel, iron, copper, and titanium can be used as the metal layer.

In one embodiment of the present invention, the average thickness of the metal layer is preferably 5-500 µm, more preferably 5-200 µm, and still more preferably 10-100 µm. By setting the thickness of the metal layer to 5 µm or greater, it is possible to improve handling properties. Further, by setting the thickness of the metal layer to 500 µm or less, the ability of the conductive resin composition-metal laminate to follow curved surfaces can be improved.

Measurement of the layer thickness is performed by cutting 20 mm square sections from five locations on the laminate which are spaced evenly in the width direction and smoothing the end surfaces such that the layer configuration can be judged, then using a laser microscope (VK-8510 manufactured by KEYENCE CORPORATION). The thickness at the five locations is measured and the arithmetic mean thereof is considered the average thickness of the metal layer.

### [Second Embodiment]

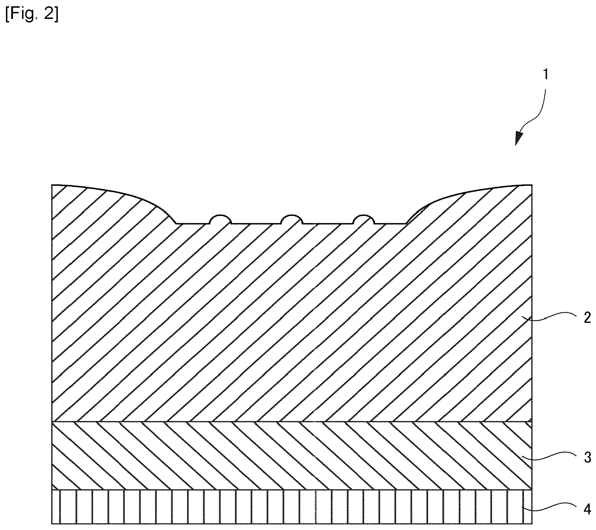

The organ model according to a second embodiment of the present invention is a medical technique practice organ model comprising the conductive resin composition-metal laminate of the first embodiment. Fig. 2 shows a cross-section of the organ model of the present invention. The organ model can have any shape selected from a circle, an ellipse, a polygon, and an indeterminate shape.

The maximum width of the organ model in a direction perpendicular to the thickness direction thereof can be, for example, in a range corresponding to the breadth of a typical ulcer and may, for example, be in the range of 10-150 mm. The thickness of the organ model is not particularly limited and may be approximately 1-30 mm or approximately 2-20 mm.

The organ model of the present embodiment can be installed in an organ model such as the stomach, esophagus, duodenum, small intestine, large intestine, liver, spleen, biliary tract, pancreas, lung, or heart and used in a medical technique practice such as endoscopic hemostasis.

In one embodiment of the present invention, the organ model may be used by being fit in a model-mounting section provided in the organ model or the organ model may be used by being attached to an inner wall of the organ model. The model-mounting section of the organ model may be a frame or indentation formed where a portion of the wall is deficient, or a model-mounting jig may be attached to the inner wall of a digestive tract model. The organ model may be attached to the inner wall using an adhesive agent, a pressure-sensitive adhesive, double-sided tape, etc.

The organ model of the present embodiment can be molded with a publicly known molding method. For example, in cases where molding is performed by using an inner mold (core) and an outer mold and by casting in the space therebetween, during removal of the inner mold, an incision may be made in the resin molding to remove the inner mold therefrom. However, in that case, it is also possible to adhere the incision and complete the organ model. It is also possible to separately mold a plurality of organ portions by injection molding, etc. and then adhere them to complete an organ model.

Medical technique practice is practice to improve the technique of physicians or medical students and to improve the quality of medical acts and for example, there is medical technique practice performed under endoscopic observation, medical technique practice performed under ultrasonic observation, etc.

In one embodiment of the present invention, the medical technique practice organ model is used for medical technique practice using an energy device. Examples of energy devices include hemostatic forceps, electroscalpels, ultrasonic scalpels, high-frequency radio wave scalpels, heat probes, microwave scalpels, laser scalpels, etc.

Specific examples of medical techniques include endoscopic demucosation, endoscopic submucosal dissection, endoscopic hemostasis, etc.

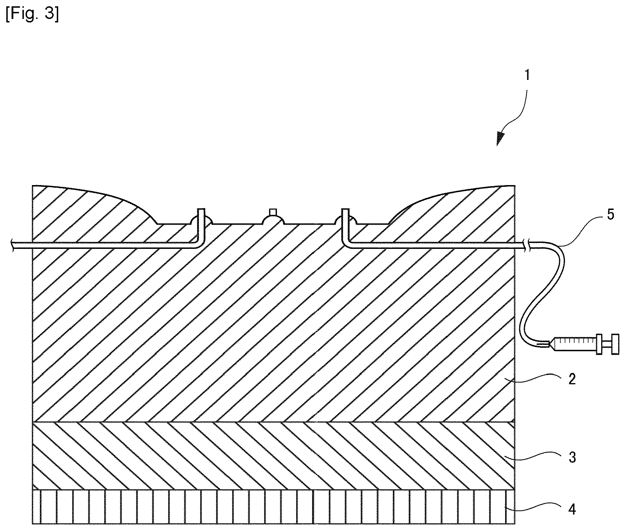

The organ model in one embodiment of the present invention comprises a simulated blood vessel connected to a device that can supply simulated blood. Fig. 3 shows a cross-section of the organ model of the present invention. The simulated blood vessel is a passage for supplying simulated blood to a surface on the substrate layer side of the organ model during the practice of hemostasis. Any device capable of supplying the simulated blood, for example, a tubular pump or syringe can be used.

In one embodiment of the present invention, the simulated blood vessel has a tubular substrate layer and a conductive layer disposed on an outer surface of the substrate layer and is a tubular structure which can be energized by an energy device.

The simulated blood vessel in one embodiment of the present invention has, at a location where the conductive layer is disposed, a surface resistivity of 1.0×10⁰ Ω/□ or greater and 1.0×10⁶ Ω/□ or less.

In the present embodiment, in accordance with JIS C 2139, the surface resistance value is measured under conditions of 23±1°C using a Hiresta-UX MCP-HT800 and a Loresta-GP (MCP-T610) manufactured by Mitsubishi Chemical Analytech Co., Ltd. When measuring, evaluation is performed using specimens formed wherein the thermoplastic resin composition was pressmolded at 160-200°C, machined into 2.5 cm × 2.5 cm resin sheets with a thickness of 1.0 mm, and the conductive layer was formed on the surface.

The organ model in one embodiment of the present invention can be used in the practice of endoscopic hemostasis. Examples of endoscopic hemostasis include so-called mechanical techniques in which a hemorrhaging site is gripped by hemostatic forceps or clips, thermocoagulation techniques such as thermocoagulation using an energy device, etc.

### EXAMPLES

The present invention shall be explained still more specifically by referring to the examples below, but interpretation of the present invention is not limited by these examples.

The raw materials and production method used in the examples, etc. are as follows.

### (A) Substrate layer

- Hydrogenated styrene-based thermoplastic elastomer: SEEPS (SEPTON 4055 manufactured by KURARAY CO., LTD.), MFR (temperature: 230°C, load: 2.16 kg) 0.0 g/10 minutes (0.0 g/10 minutes means there is no flow), styrene content: 30 mass%, hydrogenation ratio: 90 mol% or greater)
- Oil: Paraffin oil (Diana Process Oil PW90 manufactured by Idemitsu Kosan Co., Ltd.)
- Polymeric anti-static agent: Polyolefin/polyether copolymer (PELECTRON PVL manufactured by SANYO CHEMICAL INDUSTRIES, LTD.) (MFR (measured at 190 °C with a load of 2.16 kg): 8-15 g/10 minutes)
- Ionic liquid as conductivity-imparting agent: CIL-312 (manufactured by Japan Carlit Co., Ltd.)

### (B) Adhesive agent layer

- Adhesive agent 1: Epoxy-based adhesive agent, Aremco-Bond 556 (manufactured by Aremco Products, silver content: 20-40 mass%, two-liquid mixture reaction type)
- Adhesive agent 2: Olefin-based adhesive agent, TK PASTE CN-7120 (manufactured by KAKEN TECH CO., LTD., silver content: 50 mass%)
- Adhesive agent 3: Cyanoacrylate-based adhesive agent, PPX (manufactured by CEMEDINE Co., Ltd.)
- Adhesive agent 4: Urethane-based adhesive agent, Ultra Multi-Purpose SU Premium Soft (manufactured by Konishi Co., Ltd.)
- Adhesive agent 5: Silicone-based adhesive agent, Super X Clear (manufactured by CEMEDINE Co., Ltd.)

### (C) Metal layer

- Aluminum foil (manufactured by Mitsubishi Aluminum Co., Ltd., 12 µm thickness)

### (D) Adhesive gel

- Polyacrylic acid/polyvinyl alcohol (PVA) gel (TG-3 manufactured by Sekisui Kasei Co., Ltd.)

### (Production of the conductive resin composition-metal laminate and evaluation thereof)

### [Examples 1-10]

First, a conductive resin composition containing 100 parts by mass of a hydrogenated styrene-based thermoplastic elastomer, 500 parts by mass of an oil, 40 parts by mass of a polymeric anti-static agent, and 130 parts by mass of an ionic liquid was prepared.

As Examples 1-10, adhesive agent layers with the thicknesses in Table 1 were formed between a substrate layer and a metal layer using adhesive agents 1-5 and the 180° peeling strength between the substrate layer and the adhesive layer, the tensile shear adhesive strength between the substrate layer and the adhesive layer, and the volume conductivity of the conductive resin composition-metal laminate were measured with the following methods.

### • 180° Peeling strength

Test pieces 1 were manufactured by joining a conductive resin composition molded article (substrate layer) prepared with a width of 10 mm, a length of 70 mm, and a thickness of 1 mm to a position higher than 30 mm from the bottom of an acrylic plate with a width of 25 mm, a length of 100 mm, and a thickness of 2 mm with an adhesive agent (PPX manufactured by CEMEDINE Co., Ltd.).

Next, test pieces 2 were manufactured by attaching OPP tape (product name: Transparent Packing Tape No. 3303, manufactured by Nitoms, Inc.) to aluminum foil (metal layer) such that air does not enter interstices and cutting to a width of 10 mm and a length of 150 mm.

The adhesive agents 1-5 were homogeneously applied to the surface of the aluminum foil of the test pieces 2 using a Baker applicator (model number: YBA, manufactured by Yoshimitsu Seiki Co., Ltd.). Test pieces 3 were manufactured by, soon after coating for adhesive agents 1-3 and after being set aside for 10 minutes in the cases of adhesive agents 4 and 5, joining the substrate surface of the test pieces 1 to the adhesive area (width: 10 mm, length: 70 mm) and hardening the adhesive agents by curing for 24 hours in an environment with a temperature of 23±2°C and a relative humidity of 50%±5% to form adhesive agent layers.

The end parts of the aluminum foil and the acrylic plate of the obtained test pieces 3 were respectively chucked using a tension tester manufactured by SHIMADZU CORPORATION (model number: AUTOGRAPH AG-X plus) at 23±2°C in accordance with JIS K 6854-2 and the maximum force and minimum force during 180° peeling were measured with a chucking distance of 80 mm and a tension rate of 50 mm/minute across at least a peeling length of 50 mm, excluding the first 10 mm, and the arithmetic means of the maximum strength and minimum strength were calculated.

### • Tensile shear adhesive strength

Test pieces 1 were manufactured by joining a conductive resin composition molded article (substrate layer) prepared with a width of 10 mm, a length of 70 mm, and a thickness of 1 mm to a position higher than 30 mm from the bottom of an acrylic plate with a width of 25 mm, a length of 100 mm, and a thickness of 2 mm with a cyanoacrylate-based adhesive agent (PPX manufactured by CEMEDINE Co., Ltd.).

Next, test pieces 2 were manufactured by attaching OPP tape (product name: Transparent Packing Tape No. 3303, manufactured by Nitoms, Inc.) to aluminum foil (metal layer) such that air does not enter interstices and cutting to a width of 10 mm and a length of 100 mm.

The adhesive agents 1-5 were homogeneously applied to the surface of the aluminum foil of the test pieces 2 using a Baker applicator (model number: YBA, manufactured by Yoshimitsu Seiki Co., Ltd.). Test pieces 3 were manufactured by, soon after coating for adhesive agents 1-3 and after being set aside for 10 minutes in the cases of adhesive agents 4 and 5, joining the substrate surface of the test pieces 1 to the adhesive area (width: 10 mm, length: 10 mm) and hardening the adhesive agents by curing for 24 hours in an environment with a temperature of 23±2°C and a relative humidity of 50%±5% to form adhesive agent layers.

The end parts of the aluminum foil and the acrylic plate of the obtained test pieces 3 were respectively chucked using a tension tester manufactured by SHIMADZU CORPORATION (model number: AUTOGRAPH AG-X plus) at 23±2°C and the maximum value of the shearing force was measured with a chucking distance of 80 mm and a tension rate of 50 mm/minute, and determined by excluding the adhesive area (width: 10 mm, length: 10 mm).

### • Volume resistivity

Test pieces (conductive resin composition-metal laminates) were manufactured by homogeneously coating the aluminum foil (metal layer) with adhesive agents 1-5 using a Baker applicator (model number: YBA, manufactured by Yoshimitsu Seiki Co., Ltd.) and, right after coating for adhesive agents 1-3 and after being set aside for 10 minutes in the cases of adhesive agents 4 and 5, joining a conductive resin composition molded article (substrate layer) prepared with a width of 25 mm, a length of 25 mm, and a thickness of 1 mm to the adhesive area (width: 25 mm, length: 25 mm) and hardening the adhesive agents by curing for 24 hours in an environment with a temperature of 23±2°C and a relative humidity of 50% 5% to form adhesive agent layers. After adjusting the test pieces for 24 hours or more in an environment with a temperature of 23±2°C and a relative humidity of 50±5%, the volume resistivity was measured with a Loresta GP (model number: MCP-T610) resistivity meter manufactured by Mitsubishi Chemical Analytech, Co., Ltd. on the surface on the substrate side of the test pieces after 20 seconds have elapsed from electrifying using a PSP probe at a voltage of 10 V.

The results are shown in Table 1.

**[Table 1]**

| | ADHESIVE AGENT | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 |
|---|---|---|---|---|---|---|---|---|---|---|---|
| THICKNESS OF ADHESIVE AGENT LAYER (µm) | ADHESIVE AGENT 1 | 50 | 200 | 350 | 0 | 0 | 0 | 0 | 0 | 0 | 0 |
| | ADHESIVE AGENT 2 | 0 | 0 | 0 | 50 | 100 | 180 | 0 | 0 | 0 | 0 |
| | ADHESIVE AGENT 3 | 0 | 0 | 0 | 0 | 0 | 0 | 10 | 30 | 0 | 0 |
| | ADHESIVE AGENT 4 | 0 | 0 | 0 | 0 | 0 | 0 | 0 | 0 | 300 | 0 |
| | ADHESIVE AGENT 5 | 0 | 0 | 0 | 0 | 0 | 0 | 0 | 0 | 0 | 400 |
| EVALUATION ITEM | VOLUME RESISTIVITY (Ω·cm) | 5.2E+04 | 5.3.E+04 | 5.2.E+04 | 5.1.E+04 | 5.2.E+04 | 5.2.E+04 | 5.1.E+04 | 5.2.E+04 | 6.0.E+04 | 6 2.E+04 |
| | 180 DEGREE PEELING STRENGTH (N/10 mm) | 0.4 | 1.1 | 1.8 | 0.8 | 2 | 3 | 4.3 | 5.5 | 2.5 | 2.4 |
| | TENSILE SHEAR ADHESIVE STRENGTH (N/mm²) | 0.14 | 0.09 | 0.07 | 0.16 | 0.13 | 0.08 | 0.11 | 0.17 | 0.12 | 0.05 |

As is understood from Table 1, it was shown that conductive resin composition-metal laminates can be produced using adhesive agents 1-5.

In particular, regarding the cyanoacrylate-based adhesive agent of adhesive agent 3, the 180° peeling strength becomes 3.5 N/10 mm or greater, the tensile shear adhesive strength becomes 0.1 N/mm² or greater, and a large rise in volume resistivity is not observed, so it was shown that adhesive agent 3 is suitably used.

Further, to evaluate the adhesion between the conductive resin composition-metal laminates and a counter electrode plate, the 180° peeling strength and tensile shear adhesive strength between the conductive resin composition-metal laminate of Example 3 and a counter electrode plate (manufactured by Erbe GmbH, thickness: 1.0 mm) were measured. The 180° peeling strength was 1.6 N/10 mm and the tensile shear adhesive strength was 0.06 N/mm². It was confirmed from the foregoing that it is possible to attach a counter electrode plate to the surface on the metal layer-side of the conductive resin composition-metal laminate of Example 3 at a certain adhesive strength or greater, and the laminate can be used in medical technique practice using an energy device.

[Comparative Example 1] As Comparative Example 1, an adhesive gel was used in place of the adhesive agent to be used when attaching the counter electrode plate to skin, the 180° peeling strength between a structure comprising the conductive resin composition and the adhesive gel and the tensile shear adhesive strength between the structure comprising the conductive resin composition and the adhesive gel were measured with the same methods as in Example 1.

The results are shown in Table 2.

**[Table 2]**

| | COMPARATIVE EXAMPLE 1 |
|---|---|
| 180 DEGREE PEELING STRENGTH (N/10 mm) | <0.1 |
| TENSILE SHEAR ADHESIVE STRENGTH (N/mm²) | <0.01 |

As is understood from Table 2, it is shown that, in the structure of the comparative example which does not have an adhesive agent layer or a metal layer, the adhesive gel does not adhere at a certain adhesive strength or greater, and it was confirmed that a counter electrode plate cannot be attached at a sufficient strength.

### INDUSTRIAL APPLICABILITY

The conductive resin composition-metal laminate of the present invention can be used in medical technique practice using an energy device.

### REFERENCE SIGNS LIST

- 1: Conductive resin composition-metal laminate
- 2: Substrate layer
- 3: Adhesive agent layer
- 4: Metal layer
- 5: Simulated blood vessel

## Claims

1. A medical technique practice organ model (5) comprising a conductive resin composition-metal laminate (1) comprising: a substrate layer (2) formed from a conductive resin composition containing a styrene-based thermoplastic elastomer; and a metal layer (4) laminated on one surface of the substrate layer (2) via an adhesive agent layer (3).

2. The organ model (5) according to claim 1,
wherein the conductive resin composition-metal laminate (1) has a volume resistivity of 1.0×10² to 1.0×10⁷ Ω·cm.

3. The organ model (5) according to claim 1 or 2,
wherein the adhesive agent layer (3) contains one or more adhesive agents selected from the group consisting of epoxy-based adhesive agents, olefin-based adhesive agents, cyanoacrylate-based adhesive agents, urethane-based adhesive agents, and silicone-based adhesive agents.

4. The organ model (5) according to any one of claims 1 to 3, connected to a counter electrode plate.

5. The organ model (5) according to claim 1 or 2,
wherein the medical technique practice uses an energy device.

6. The organ model (5) according to claim 5,
wherein the energy device is any device selected from the group consisting of a high-frequency hemostatic forceps, an electroscalpel, an ultrasonic scalpel, and a high-frequency radioscalpel.

7. The organ model (5) according to claim 1 or 2,
comprising a simulated blood vessel connected to a device that can supply simulated blood.

8. The organ model (5) according to claim 1 or 2,
wherein the medical technique practice is a practice of endoscopic hemostasis.

9. The organ model (5) according to claim 8,
wherein the practice of endoscopic hemostasis is a practice of hemostasis by thermocoagulation using an energy device.

## Patentansprüche

1. Ein Organmodell (5) zum Üben medizinischer Technik, das ein Laminat aus leitfähiger Harzzusammensetzung und Metall (1) beinhaltet, das Folgendes beinhaltet: eine Substratschicht (2), die aus einer leitfähigen Harzzusammensetzung gebildet ist, die ein thermoplastisches Elastomer auf Styrolbasis enthält; und eine Metallschicht (4), die über eine Klebstoffschicht (3) auf eine Oberfläche der Substratschicht (2) laminiert ist.

2. Organmodell (5) gemäß Anspruch 1,
wobei das Laminat aus leitfähiger Harzzusammensetzung und Metall (1) einen spezifischen Durchgangswiderstand von 1,0 x 10² bis 1,0 x 10⁷ Ω·cm aufweist.

3. Organmodell (5) gemäß Anspruch 1 oder 2,
wobei die Klebstoffschicht (3) einen oder mehrere Klebstoffe enthält, die aus der Gruppe ausgewählt sind, die aus Klebstoffen auf Epoxidbasis, Klebstoffen auf Olefinbasis, Klebstoffen auf Cyanacrylatbasis, Klebstoffen auf Urethanbasis und Klebstoffen auf Silikonbasis besteht.

4. Organmodell (5) gemäß einem der Ansprüche 1 bis 3, das mit einer Gegenelektrodenplatte verbunden ist.

5. Organmodell (5) gemäß Anspruch 1 oder 2,
wobei die Übung medizinischer Technik eine Energievorrichtung verwendet.

6. Organmodell (5) gemäß Anspruch 5,
wobei die Energievorrichtung eine beliebige Vorrichtung ist, die aus der Gruppe ausgewählt ist, die aus einer hämostatischen Hochfrequenzzange, einem Elektroskalpell, einem Ultraschallskalpell und einem Hochfrequenz-Radioskalpell besteht.

7. Organmodell (5) gemäß Anspruch 1 oder 2,
das ein simuliertes Blutgefäß beinhaltet, das mit einer Vorrichtung verbunden ist, die simuliertes Blut zuführen kann.

8. Organmodell (5) gemäß Anspruch 1 oder 2,
wobei die Übung medizinischer Technik eine Übung der endoskopischen Hämostase ist.

9. Organmodell (5) gemäß Anspruch 8,
wobei die Übung der endoskopischen Hämostase eine Übung der Hämostase durch Thermokoagulation unter Verwendung einer Energievorrichtung ist.

## Revendications

1. Un modèle d'organe pour l'entraînement à une technique médicale (5) comprenant un stratifié de composition de résine conductrice et de métal (1) comprenant : une couche de substrat (2) formée à partir d'une composition de résine conductrice contenant un élastomère thermoplastique à base de styrène ; et une couche de métal (4) stratifiée sur une surface de la couche de substrat (2) par l'intermédiaire d'une couche d'agent adhésif (3).

2. Le modèle d'organe (5) selon la revendication 1,
dans lequel le stratifié de composition de résine conductrice et de métal (1) a une résistivité volumique de 1,0 x 10² à 1,0 x 10⁷ Ω·cm.

3. Le modèle d'organe (5) selon la revendication 1 ou la revendication 2,
dans lequel la couche d'agent adhésif (3) contient un ou plusieurs agents adhésifs sélectionnés dans le groupe constitué d'agents adhésifs à base d'époxy, d'agents adhésifs à base d'oléfine, d'agents adhésifs à base de cyanoacrylate, d'agents adhésifs à base d'uréthane, et d'agents adhésifs à base de silicone.

4. Le modèle d'organe (5) selon l'une quelconque des revendications 1 à 3, connecté à une plaque de contre-électrode.

5. Le modèle d'organe (5) selon la revendication 1 ou la revendication 2,
dans lequel l'entraînement à la technique médicale utilise un dispositif énergétique.

6. Le modèle d'organe (5) selon la revendication 5,
dans lequel le dispositif énergétique est n'importe quel dispositif sélectionné dans le groupe constitué d'une pince hémostatique haute fréquence, d'un électrobistouri, d'un bistouri à ultrasons, et d'un radiobistouri haute fréquence.

7. Le modèle d'organe (5) selon la revendication 1 ou la revendication 2,
comprenant un vaisseau sanguin simulé connecté à un dispositif qui peut fournir du sang simulé.

8. Le modèle d'organe (5) selon la revendication 1 ou la revendication 2,
dans lequel l'entraînement à la technique médicale est un entraînement à l'hémostase endoscopique.

9. Le modèle d'organe (5) selon la revendication 8,
dans lequel l'entraînement à l'hémostase endoscopique est un entraînement à l'hémostase par thermocoagulation à l'aide d'un dispositif énergétique.
